# EUROPEAN PATENT APPLICATION

(11) **EP 2 107 777 A1**
(43) Date of publication of application: **07.10.2009**
(21) Application number: 08300172.7
(22) Date of filing: 04.04.2008
(51) Int. Cl.: H04M 3/58

(54) **An application server for shifting a call background of the invention**

(71) Applicant: Alcatel Lucent, 75008 Paris (FR)
(72) Inventor: Satapathy, Santoshi Nandan, 600 114, Chennai, Tamil Nadu (IN)
(74) Representative: Sciaux, Edmond

(57) **Abstract**

An application server (AS) for shifting a call established between a first terminal (TA) of a first user and a second terminal (TB1) of the second user, in order to establish it between said first terminal (TA) and a third terminal (TB2) which is another terminal of the second user, comprises:
- means for receiving a call shifting service request message (19 ; 39), from one of the user or from a network equipment,
- means for checking (40) that the second user has subscribed to the call shifting service,
- means for retrieving (40) the number of at least a third terminal (TB2) which is another terminal of the second user,
- means for requesting (21) a Call Session Controller (CSC) to release the call established between the first terminal and the second terminal (TB1), and to establish a new call between the first terminal and the third terminal (TB3).

## Description

### BACKGROUND OF THE INVENTION

### Field of the invention

The present invention generally relates to an application server for call shifting in a telecommunication network. Some users have multiple terminals such as a landline phone, a cellular mobile phone, a soft phone on a personal computer. Such a user may want to shift an existing call from a terminal to another, for instance if the user prefers to continue the call on another terminal. Such a call shifting may also be useful to change of network, in case of network related disturbances.

### Description of the prior art

For instance, User A requests the setup of a call to the landline phone of User B. User B off hooks his/her landline phone and answers the call. Then, due to some reason or disturbances (noise for instance), User B wants to shift the existing call to his/her cellular phone or soft phone. In the known networks, User B can make a call shifting by means of the Call Hold service and of the Call Transfer service: User B puts User A on hold, then User B calls his/her cellular phone (or soft phone), and at last User B on hooks the landline phone. After all these steps, the call is shifted from User B landline phone to User B cellular phone (respectively soft phone). User B is again in conversation with User A.

This current approach includes two phases: First, to put User A on hold.

Second, to dial the number of another phone of User B. So User A has to stay in hold state for quite some time.

Thus, there is a need to provide a technical solution for quickly shifting a call, when a user wants to.

In addition, a user may want an automatic shifting of a call in case of sudden network disturbances. This is not possible by currently existing supplementary services in known networks.

Thus, there is a need to provide a technical solution for automatically shifting a call, when this call is affected by disturbances of the supporting network.

This can be solved by applying, the application server according to the invention.

### SUMMARY OF THE INVENTION

The object of the invention is an application server for shifting a call established between a first terminal of a first user and a second terminal of the second user, in order to establish it between said first terminal and a third terminal which is another terminal of the second user; **characterized_in that** it comprises:
- means for receiving a call shifting service request message,
- means for checking that the second user has subscribed to the call shifting service,
- means for retrieving the number of at least a third terminal which is another terminal of the second user,
- means for requesting a Call Session Controller to release the call established between the first terminal and the second terminal, and to establish a new call between the first terminal and the third terminal.

Thanks to this application server, the second user has a very short time to wait, because the first user triggers the shifting by a single command.

According to a peculiar embodiment of the server according to the present invention, means for receiving a call shifting service request message are adapted to receive a call shifting service request message triggered by the user of the second terminal.

Thanks to this characteristic, in case the second users wants to shift the call for any reason, the first and the second users have a very short time to wait, for shifting the call, thanks to the fact that the application server can receive a simple call shifting service request message easily triggered by the second user.

According to a peculiar embodiment of the server according to the present invention, means for receiving a call shifting service request message are adapted to receive a call shifting service request message triggered by a network equipment detecting a disturbance or some noise affecting the call.

Thanks to this characteristic, in case of network disturbances, the first and the second users have a very short time to wait, for shifting the call, because the network can automatically trigger the shifting thanks to the fact that the application server can receive a call shifting service request message triggered by a network equipment detecting a disturbance or some noise affecting the call.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which :
- Fig. 1 shows a signalling flow for an example in which a call shifting is triggered by the called user.
- Fig. 2 shows a signaling flow for an example in which a call shifting is triggered by an access equipment of the network.

### DETAILED DESCRIPTION OF THE PREFERRED EMBODIMENTS

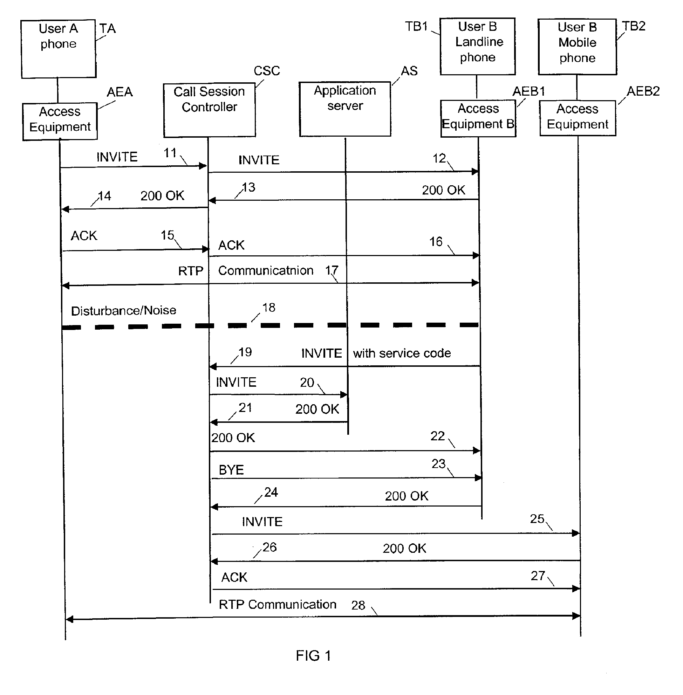

Figure 1 shows a signalling flow for an example in which a call shifting is triggered by a called user, B, in a SIP supporting network (for instance an IMS (Internet Multimedia Subsystem) network. This network mainly comprises :
- Access Equipment A, referenced EAA, for linking a phone TA of User A to the SIP supporting network.
- Access Equipment B, referenced EAB, for linking a landline phoneTB1 of User B to the SIP supporting network.
- Access Equipment B', referenced EAB, for linking a cellular mobile phone TB of User B to the SIP supporting network.
- A call session controller, CSC.
- An application server AS1, according to the invention. It comprises a memory which stores the identity of each user who has subscribed to the Call Shifting Service, associated with the numbers respectively designating the terminals of his user (called end points in SIP terminology). The application server AS can distinguish which terminal is active in a call and to which terminal an existing call can be shifted.

**Step 11:** User A calls User B, by the phone TA. The access equipment AEA, to which terminal Ta is linked, sends a SIP message INVITE to the call session controller CSC. This message contains the number of the called landline phone TB1 of User B.
**Step 12:** The call session controller CSC forwards this message INVITE to the access equipment AEB1 linked to the called landline phone TB1 of User B.
**Step 13:** When User B off hooks the landline phone TB1, this latter sends a SIP message 200 OK which indicates that the call is accepted.
**Step 14:** The call session controller CSC forwards this message 200 OK to the access equipment AEA.
**Step 15:** The access equipment AEA acknowledges reception by sending a SIP message ACK to the call session controller CSC.
**Step 16:** The call session controller CSC forwards this message ACK to the access equipment AEB1 linked to the called landline phone TB1 of User B.
**Step 17:** A communication is established between the terminals TA and TB1, via the access equipments AEA and AEB1, with the Real-Time Transport Protocol (RTP).
**Step 18:** After some time, User B decides to transfer the call to his/her mobile phone TB2, for Instance because the user B is about to leave his/her home and walk outside.
**Step 19:** User B dials a service code (Four digits for instance, designating the Call Shifting Service) on the keyboard of the landline phone TB1. This latter sends a SIP message INVITE to the call session controller CSC, this message containing the service code designating the Call shifting Service.
**Step 20:** When receiving the message INVITE and detecting that it contains this service code, the call session controller CSC forwards this message to the application server AS.
**Step 21:** The application server AS checks in a memory whether the User B has subscribed to the Call Shifting Service. In this example, the User B has subscribed. Then the application server AS retrieves, in its memory, the numbers of the terminals TB1 and TB2 associated to the identity of the User B. Then it checks the status of the terminals : The terminal TB1 is currently busy with a call, and the terminal TB2 is available. Then, the application server AS gives an approval for releasing the current call, by sending a SIP message 200 OK to the call session controller CSC.
**Step 22:** The call session controller CSC answers to the access equipment AEB1 by sending a message 200 OK meaning that the Call Shifting Service request is accepted.
**Step 23:** Then the call session controller CSC sends a SIP message BYE to the access equipment AEB1 for indicating that the current call must be released.
**Step 24:** The access equipment AEB1 acknowledges reception by sending a SIP message 200 OK to the call session controller CSC, indicating that the call is actually released.
**Step 25:** Then the call session controller CSC sends a SIP message INVITE to the access equipment AEB2, this message containing the number of the mobile phone TB2 of User B, for requesting the setup of a new call, to the mobile phone TB2.
**Step 26:** When User B off hooks the mobile phone TB2, the access equipment AEB2 sends a SIP message 200 OK which indicates that the call is accepted by the mobile phone TB2.
**Step 27:** The call session controller CSC sends a SIP message ACK to the access equipment AEB2 linked to the called mobile phone TB2 for acknowledging reception of the message 200 OK.
**Step 28:** A new communication is established between the terminals TA and TB2, via the access equipments AEA and AEB1, with the Real-Time Transport Protocol (RTP).

Of course, the Call shifting Service may be invoked in the same way to shift a call backwards, from the mobile terminal TB2 to the landline phone TB1 : User B dials the same service code again.

The Call shifting Service may also be invoked in the same way, by the same User B, if the initial call has been setup on request of the User B instead of the User A.

When the new call is established, charging is started for the served user.

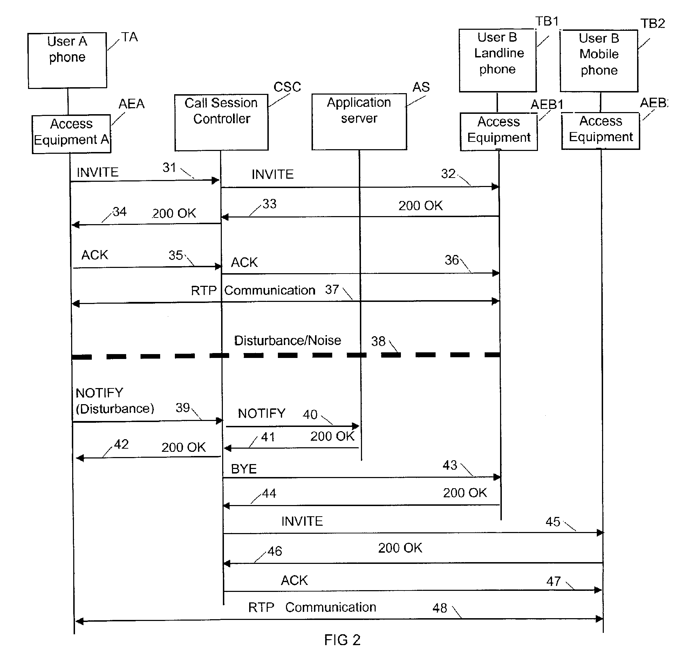

**Fig. 2** shows a signaling flow for an example in which a call shifting is triggered by an equipment of the network. The network is the same as in the previous example. Step 31-37 are the same as steps 11-17 described above, for setting up a first call. For instance the access equipment AEA to which the terminal TA is linked, has detected some disturbance or some noise affecting the call during step 38.
**Step 39:** The access equipment AEA it sends a SIP message NOTIFY to the call session controller CSC. This message contains a service code invoking the Call Shifting Service, and specifying that it is invoked because of some disturbance. In such a case, the call shifting may be applied either on User A's side or on User B's side according to who is subscribed to the service, and according to what terminals are available to make the call shifting. In this example, a call shifting cannot be done on User A's side, since User A has only one phone available.
**Step 40:** When receiving the message NOTIFY and detecting that it contains this service code, the call session controller CSC forwards this message to the application server AS.
**Step 41:** The application server AS checks in a memory whether the User A or the USER has subscribed to the Call Shifting Service. In this example, the User B has subscribed. Then the application server AS retrieves, in its memory, the numbers of the terminals TB1 and TB2 associated to the identity of the User B. Then it checks the status of the terminals : The terminal TB1 is currently busy with a call, and the terminal TB2 is available. Then, the application server AS gives an approval for releasing the current call, by sending a SIP message 200 OK to the call session controller CSC. This message contains ... ???
**Step 42:** The call session controller CSC answers to the access equipment AEB1 by sending a message 200 OK meaning that the Call Shifting Service request is accepted.
**Step 43:** Then the call session controller CSC sends a SIP message BYE to the access equipment AEB1 for indicating that the current call must be released.
**Step 44:** The access equipment AEB1 acknowledges reception by sending a SIP message 200 OK to the call session controller CSC, indicating that the call is actually released.
**Step 45:** Then the call session controller CSC sends a SIP message INVITE to the access equipment AEB2, this message containing the number of the mobile phone TB2 of User B, for requesting the setup of a new call, to the mobile phone TB2.
**Step 46:** When User B off hooks the mobile phone TB2, the access equipment AEB2 sends a SIP message 200 OK which indicates that the call is accepted by the mobile phone TB2.
**Step 47:** The call session controller CSC sends a SIP message ACK to the access equipment AEB2 linked to the called mobile phone TB2 for acknowledging reception of the message 200 OK.
**Step 48:** A new communication is established between the terminals TA and TB2, via the access equipments AEA and AEB1, with the Real-Time Transport Protocol (RTP).
   The same process may be triggered by any other network equipment which detects that the current call is affected by some disturbance or noise.

## Claims

1. An application server (AS) for shifting a call established between a first terminal (TA) of a first user and a second terminal (TB1) of the second user, in order to establish it between said first terminal (TA) and a third terminal (TB2) which is another terminal of the second user; **characterized in that** it comprises:
- means for receiving a call shifting service request message (19 ; 39),
- means for checking (40) that the second user has subscribed to the call shifting service,
- means for retrieving (40) the number of at least a third terminal (TB2) which is another terminal of the second user,
- means for requesting (21) a Call Session Controller (CSC) to release the call established between the first terminal and the second terminal (TB1), and to establish a new call between the first terminal and the third terminal (TB3).

2. An application server (AS) according to claim 1, **characterized in that** said means for receiving a call shifting service request message are adapted to receive a call shifting service request message (19) triggered by the user of the second terminal (TB1).

3. An application server (AS) according to claim 1, **characterized in that** said means for receiving a call shifting service request message are adapted to receive a call shifting service request message (39) triggered by a network equipment detecting a disturbance or some noise affecting the call.
